# EUROPÄISCHE PATENTSCHRIFT

(11) **EP 4 251 019 B1**
(45) Veröffentlichungstag und Bekanntmachung des Hinweises auf die Patenterteilung: **11.12.2024**
(21) Anmeldenummer: 21729450.3
(22) Anmeldetag: 25.05.2021
(51) Int. Cl.: A47J 43/28

(54) **VORRICHTUNG ZUM HALTEN VON KOCHBEUTELN**
DEVICE FOR HOLDING COOKING BAGS
DISPOSITIF DE RETENUE DE SACS DE CUISSON

(30) Priorität: 30.11.2020 DE 202020106856 U
(43) Veröffentlichungstag der Anmeldung: 04.10.2023
(73) Patentinhaber: Gröner, Markus, 72511 Bingen (DE)
(72) Erfinder: Gröner, Markus, 72511 Bingen (DE)
(74) Vertreter: Kuhnen & Wacker Patent- und Rechtsanwaltsbüro PartG mbB
(86) Internationale Anmeldenummer: PCT/EP2021/063866
(87) Internationale Veröffentlichungsnummer: WO 2022/111863

(56) Entgegenhaltungen:
- DE-U1- 29 907 802
- US-A- 2 551 877
- US-A- 3 774 251
- US-A- 3 819 089

## Beschreibung

### GEBIET DER ERFINDUNG

Die vorliegende Erfindung betrifft eine Vorrichtung zum Halten von Kochbeuteln.

### STAND DER TECHNIK

Kochbeutel werden klassisch für die schnelle und einfache Zubereitung von Reis verwendet. Aber auch Nudeln, Gemüse, Obst, Knödel oder andere Lebensmittel lassen sich mit Kochbeuteln einfach zubereiten.

Zudem erfreut sich in den letzten Jahren zunehmend das Vakuumgaren oder Sous-vide-garen von Fleisch, Fisch, Meeresfrüchten und anderen Lebensmitteln steigender Beliebtheit, da bei dieser Art der Zubereitung die Speisen in einen Kunststoffbeutel eingeschweißt werden, aus dem die Luft mit einem Vakuumiergerät abgesaugt wurde, und dann bei konstanter Wassertemperatur im Bereich von 50 bis 85 °C schonend zubereitet werden.

Die Zubereitung von Speisen bzw. Lebensmitteln mit einem Kochbeutel hat jedoch den Nachteil, dass nach dem Gar-/Kochvorgang der Kochbeutel zumeist mit einer Gabel oder einem Kochlöffel aus dem heißen Wasser "geangelt" werden muss, und man, um an den zubereiteten Inhalt zu gelangen, den Kochbeutel aufschneiden muss, wodurch man mitunter gezwungen ist, den noch heißen Kochbeutel mit den Händen zu greifen, um ihn aufzuschneiden.

Zudem führt das Abtropfen lassen des Kochwassers, insbesondere bei Gemüse, Reis oder Nudeln, dazu, dass der Kochbeutel sich "glitschig" anfühlt, man diesen mithin nach dem Kochen nicht gerne in die Hand nimmt. Zudem wird das Ergreifen des Kochbeutels nach dem Abtropfen lassen mit den bloßen Händen - ohne Handschuhe - mitunter aus hygienischen Aspekten kritisch gesehen.

Um das Entnehmen von Kochbeuteln aus dem heißen Wasser zu vereinfachen ist aus dem Stand der Technik bekannt, den Kochbeutel während der Zubereitung der darin enthaltenen Speisen in eine spezielle Halterung einzuhängen, die dann am Topfrand das heiße Wasserbad überspannend befestigt wird.

Mit einer derartigen, beispielsweise in der US 3,819,089 offenbarten Halterung ist es nicht mehr länger nötig, den Kochbeutel nach dem Gar-/Kochvorgang aus dem heißen Wasserbad zu fischen, da dieser bereits in der Halterung hängend gegart wurde.

Gleichwohl erfordert die Verwendung einer derartigen Halterung auch die Verwendung spezieller, teurer Kochbeutel, die in der Halterung gehalten werden können. Zudem wird die Halterung, da sie über dem heißen Wasserbad hängt, unangenehm heiß, so dass der Nutzer selbige nicht einfach mit den Händen greifen kann.

Ein anderer Ansatz betreffend den Umgang mit Kochbeuteln bei der Zubereitung von Speisen wird in der US 3,774,251 verfolgt. Diese Druckschrift schlägt vor, ein scherenartiges Werkzeug zu verwenden, um den Kochbeutel aus dem heißen Wasser zu fischen und dann unmittelbar an dem durch die Scherenschenkel gehaltenen Ende aufzuschneiden. Hierfür sind die Scherenschenkel mit Schneiden versehen.

Dieses komplexe, vielteilige Werkzeug ist dabei jedoch nicht geeignet, den Kochbeutel zunächst einfach abtropfen zu lassen. Vielmehr müsste der Kochbeutel irgendwo abgelegt oder vermittels des Werkzeugs die ganze Zeit gehalten werden.

Zudem kann es passieren, dass beim erneuten Aufnehmen des Kochbeutels nach dem Abtropfen oder sogar bereits beim Herausnehmen des Kochbeutels aus dem Wasserbad dieser versehentlich aufgeschnitten wird, der Inhalt somit unkontrolliert verteilt wird. Auch ist es möglich, dass beim Aufschneiden des Kochbeutels dieser samt Inhalt abfällt, so dass der Kochbeutel doch wieder mit der Hand ergriffen werden muss.

Eine der Erfindung strukturell ähnliche Vorrichtung zum Wenden von Lebensmitteln ist aus der US 2,551,877A bekannt.

### KURZFASSUNG DER ERFINDUNG

Ausgehend von dem vorstehend genannten Stand der Technik ist es daher Aufgabe der vorliegenden Erfindung, eine einfach handhabbare Vorrichtung zum Halten von Kochbeuteln zu schaffen, die es einerseits erlaubt, den Kochbeutel mitsamt der darin gehaltenen Lebensmittel einfach und schnell abtropfen zu lassen und es andererseits ermöglicht, den Kochbeutel anschließend für die Entnahme von zubereiteten Speisen bzw. Lebensmitteln zu öffnen, ohne den Kochbeutel hierfür mit der Hand greifen zu müssen. Zudem soll die Vorrichtung die Entnahme des Kochbeutels aus dem heißen Wasser erleichtern.

Diese Aufgabe wird gelöst mit der Vorrichtung zum Halten von Kochbeuteln mit den Merkmalen des Anspruchs 1; vorteilhafte Weiterbildungen sind Gegenstand der Unteransprüche.

Gemäß einem Aspekt der Erfindung wird eine Vorrichtung zum Halten von Kochbeuteln geschaffen, die eine im Wesentlichen rechteckig ausgebildete Ablagefläche, ein Griffstück, und einen Einhängeabschnitt umfasst.

Das Griffstück und der Einhängeabschnitt sind dabei erfindungsgemäß an einem in Längsrichtung der Ablagefläche oberen Rand, vorzugsweise in der Mitte der Ablagefläche in Breitenrichtung, angeordnet und erstrecken sich in zueinander entgegengesetzte Richtungen entlang einer Dickenrichtung der Ablagefläche.

Das Griffstück bildet mit der Ablagefläche im Wesentlichen eine U-Form, wobei das Griffstück von einer Rückseite der Ablagefläche beabstandet und der Rückseite der Ablagefläche zugewandt ist, und sich in einem Winkel, insbesondere zwischen 0° und 20°, entlang der Ablagefläche erstreckend ausgebildet ist.

Der Einhängeabschnitt bildet mit der Ablagefläche im Wesentlichen eine L-Form, wobei der Einhängeabschnitt sich in einem Winkel, insbesondere zwischen 90° und 130°, relativ zu einer Vorderseite der Ablagefläche von der Vorderseite der Ablagefläche weg erstreckend ausgebildet ist. In einer bevorzugten Ausgestaltung sind das Griffstück und der Einhängeabschnitt einstückig mit der Ablagefläche ausgebildet.

Mit der erfindungsgemäßen Vorrichtung zum Halten von Kochbeuteln (nachstehend auch einfach kurz als Vorrichtung bezeichnet) ist es besonders einfach möglich, den Kochbeutel nach dem Garen abtropfen zu lassen und dann schnell und einfach zum Entleeren zu öffnen, ohne den Kochbeutel hierfür mit der Hand greifen zu müssen.

Hierfür kann der Kochbeutel wie gewohnt mit einer Gabel oder dergleichen aus dem Wasserbad gefischt werden und an den Einhängeabschnitt der Vorrichtung gehängt werden.

Erfindungsgemäß ist es darüber hinaus auch möglich, dass der Kochbeutel bereits vor der Zubereitung der darin befindlichen Speisen - im trockenen Zustand - an der erfindungsgemäßen Vorrichtung eingehängt wird und dann mitsamt der Vorrichtung zum Kochen an den Topf gehängt wird.

Hierbei ist es durch die U-förmige Ausgestaltung von Griffstück und Ablagefläche besonders vorteilhaft möglich, die Vorrichtung einfach am Topfrand einzuhängen. Somit kann der Kochbeutel nach der Zubereitung auch problemlos aus dem heißen Wasser im Topf entnommen werden, ohne dass er hierfür mit einer Gabel oder dergleichen "geangelt" werden müsste.

Denn bereits zum Zubereiten der im Kochbeutel enthaltenen Speisen, spätestens jedoch nach der Entnahme des Kochbeutels aus dem heißen Wasser, kann der Kochbeutel am Einhängeabschnitt eingehängt werden und die Vorrichtung zum Halten von Kochbeuteln kann am Topf eingehängt werden. Nach dem Zubereiten der Speisen bzw. Lebensmittel kann die Vorrichtung mit dem daran hängenden Kochbeutel einfach zum Abtropfen abgestellt werden.

Da die Ablagefläche aufgrund des daran ausgebildeten Griffstücks geneigt steht, kann das Wasser ungehindert ablaufen und der Kochbeutel kann dann einfach aufgeschnitten werden.

Dabei ist auch denkbar, die Vorrichtung nicht nur für die Ablage von Kochbeuteln zu verwenden. Vielmehr kann die Vorrichtung auch für die Ablage von Teebeuteln mit losem Tee oder Gewürzsäckchen mit Gewürzmischungen, z.B. für die Zubereitung von Soßen oder Glühwein, nach dem Ziehen verwendet werden.

Indem der Nutzer beim Aufschneiden des Kochbeutels das Griffstück greift und die Vorrichtung über ein zu befüllendes Gefäß, beispielsweise eine Schüssel hält, kann der Inhalt des Kochbeutels leicht in die Schüssel entleert werden, ohne dass der Nutzer hierfür den Kochbeutel mit der Hand anfassen müsste.

Eine unangenehme, mitunter auch unhygienische Handhabung des Kochbeutels, die sonst durch das Ergreifen des Kochbeutels nach dem Abtropfen und bei der Entleerung desselben erfolgt, kann somit vermieden werden.

Die einstückige Ausgestaltung erlaubt zudem eine höchst stabile und dennoch einfache, mitunter kostengünstige Herstellung der erfindungsgemäßen Vorrichtung.

Nach einem weiteren Aspekt der vorliegenden Erfindung kann das Griffstück aus zwei sich im Wesentlichen U-förmig von der Ablagefläche weg erstreckenden, zur Rückseite der Ablagefläche hin gebogenen Schenkeln und einer sich an die Schenkel, insbesondere einstückig, anschließenden Griffplatte bestehen.

Diese Ausgestaltung erlaubt eine stabile und insbesondere verwindungssteife Ausgestaltung der Vorrichtung zum Halten von Kochbeuteln.

Nach einem weiteren Aspekt der vorliegenden Erfindung kann der Einhängeabschnitt aus einer sich zwischen den beiden Schenkeln des Griffstücks im Wesentlichen L-förmig von der Ablagefläche weg erstreckenden Zunge bestehen.

Durch die Ausbildung des Einhängeabschnitts als eine sich zwischen den beiden Schenkeln des Griffstücks im Wesentlichen L-förmig von der Ablagefläche weg erstreckenden Zunge ist es besonders vorteilhaft möglich, die Vorrichtung einfach und mit wenig Materialaufwand - aus einem Stück - herzustellen.

Nach einem weiteren Aspekt der vorliegenden Erfindung kann in zumindest einem Teilbereich der Vorderseite der Ablagefläche an einem in Längsrichtung der Ablagefläche unteren Rand der Ablagefläche eine sich von der Vorderseite der Ablagefläche weg erstreckende Auflage ausgebildet sein.

Diese Auflage kann nach einem weiteren Aspekt im Wesentlichen dreieckig ausgebildet sein, wobei eine von der Ablagefläche weg weisende Spitze der dreieckigen Auflage eine, insbesondere aus einem Zacken- oder Wellenschliff bestehende, Schneidkante aufweisen kann.

Diese Ausgestaltung erlaubt es in besonders vorteilhafter Weise, im Kochbeutel gegarte Speisen nicht nur zum Abtropfen auf der Ablagefläche abzulegen sondern auch, den Kochbeutel ohne Zuhilfenahme weiterer Werkzeuge wie beispielsweise einem Messer oder einer Schere unmittelbar durch die als Zacken- oder Wellenschliff ausgebildete Schneidkante zu öffnen.

So kann beispielsweise nach der Zubereitung eines Sous-vide gegarten Stücks Fleisch oder Fisch dieses nach dem Abtropfen mitsamt dem Kochbeutel mit einer Küchenzange gegriffen werden und der Beutel kann dann an der als Wellenschliff ausgebildeten Schneidkante geöffnet werden, wodurch das fertig gegarte Stück Fleisch oder Fisch schnell und einfach - hygienisch - aus dem Beutel entnommen werden kann, ohne hierfür den Kochbeutel oder das Lebensmittel direkt mit der Hand anfassen zu müssen.

Nach einem weiteren Aspekt der vorliegenden Erfindung kann die Ablagefläche trapezartig oder kreissegmentartig ausgebildet sein und/oder kann sich zum in Längsrichtung der Ablagefläche oberen Rand hin verjüngend oder kegelstumpfartig ausgebildet sein.

Diese Ausgestaltung erlaubt ein vorteilhafter Weise eine stabile und herunterfallsichere Ablage des Kochguts auf der Ablagefläche und sorgt gleichzeigt dafür, dass das Kochwasser durch die trapezartige oder kreissegmentartige Ausgestaltung der Ablagefläche geführt vom Kochgut weg abfließen kann.

Zudem kann die Vorrichtung zum Halten von Kochbeuteln aufgrund der sich nach oben verjüngend oder kegelstumpfartig zulaufenden Ausgestaltung mit einem geringen Gewicht ausgebildet werden.

Nach einem weiteren Aspekt der vorliegenden Erfindung kann das Griffstück zumindest teilweise, insbesondere im Übergangsbereich von der Ablagefläche zu den Schenkeln und/oder im Bereich der sich an die Schenkel anschließenden Griffplatte, eine Wärmeisolierung aufweisen.

Durch das Vorsehen einer Wärmeisolierung, entweder durch geeignete Materialauswahl oder durch das nachträgliche Aufbringen einer Isolierschicht, beispielsweise aus einem Kunststoff oder mittels einer Keramikbeschichtung, ist es vorteilhaft möglich, Verletzungen aufgrund der beim Zubereiten der Speisen entstehenden Erwärmung der Vorrichtung zum Halten von Kochbeuteln zu vermeiden.

Denn insbesondere wenn die Vorrichtung während des gesamten Zubereitungsvorgangs am Topf eingehängt ist, wird die Wärme des Wassers in die Vorrichtung geleitet, die sich entsprechend erwärmt. Wenn der Nutzer nun die Vorrichtung greift, kann diese bereits soweit aufgeheizt sein, dass sich der Nutzer die Finger verbrennt.

Sofern daher am Übergangsbereich von der Ablagefläche zu den Schenkeln (dem Bauch des U) und/oder im Bereich der sich an die Schenkel anschließenden Griffplatte eine Wärmeisolierung bereitgestellt ist, die einen Wärmeübergang verhindert, kann die Vorrichtung zum Halten von Kochbeuteln problemlos vom heißen Topf entfernt werden, ohne sich die Finger zu verbrennen.

Nach einem weiteren Aspekt der vorliegenden Erfindung kann die Vorrichtung aus einem Stanz-Biegeteil, einem Druckgussteil oder einem Spritzgussteil bestehen. Auch Kombinationen hiervon sind denkbar.

Die Ausgestaltung als Stanz-Biegeteil, Druckgussteil oder Spritzgussteil erlaubt eine höchst einfache, kostengünstige Herstellung, die gleichzeitig eine gewisse Freiheit bei der Wahl der Form der Ablagefläche zulässt. Zudem ist eine einfache und hygienische Reinigung möglich.

### KURZE BESCHREIBUNG DER FIGUREN

- Fig. 1: zeigt eine perspektivische Ansicht einer Ausführungsform einer erfindungsgemäßen Vorrichtung zum Halten von Kochbeuteln von vorne;
- Fig. 2: zeigt eine perspektivische Ansicht einer Ausführungsform einer erfindungsgemäßen Vorrichtung zum Halten von Kochbeuteln von hinten; und
- Fig. 3: zeigt eine perspektivische Ansicht einer Ausführungsform einer erfindungsgemäßen Vorrichtung zum Halten von Kochbeuteln von der Seite.

### DETAILLIERTE BESCHREIBUNG VON AUSFÜHRUNGSFORMEN

Eine beispielhafte Ausführungsform der erfindungsgemäßen Vorrichtung zum Halten von Kochbeuteln wird nachstehend unter Bezugnahme auf die Zeichnungen beschrieben.

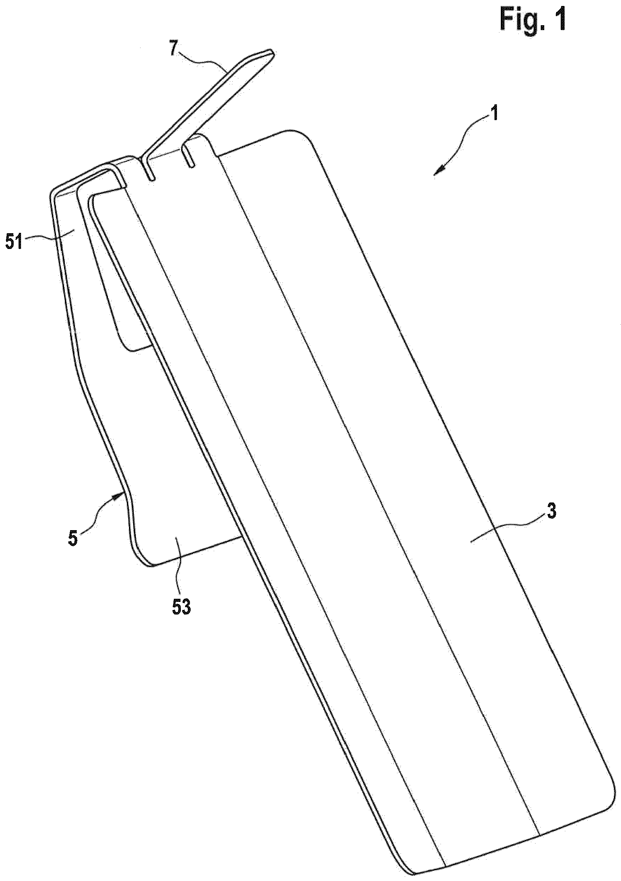

Bezug nehmend auf Fig. 1 erstreckt sich die Längsrichtung der erfindungsgemäßen Vorrichtung 1 zum Halten von Kochbeuteln in der Zeichnung im Wesentlichen entlang der Seitenrichtung von oben nach unten und die Breitenrichtung der erfindungsgemäßen Vorrichtung 1 erstreckt sich in der Zeichnung im Wesentlichen entlang der Seitenrichtung von links nach rechts.

Die hier dargestellte Vorrichtung 1 zum Halten von Kochbeuteln (nachstehend auch einfach kurz als Vorrichtung bezeichnet) besteht aus einem Stanz-Biegeteil aus Edelstahl. Alternativ kann die Vorrichtung auch als ein Aluminium-Druckgussteil oder ein Kunststoff-Spritzgussteil ausgebildet sein. Zudem sind unterschiedlichste Kombinationen aus Edelstahl, Kunststoff, Keramik, Aluminium und dergleichen denkbar, solange die Vorrichtung ausreichend hitzebeständig, lebensmittelecht und leicht zu reinigen ist.

Wie in Fig. 1 dargestellt ist, besteht die Vorrichtung 1 aus einer im Wesentlichen rechteckig ausgebildeten, trapezförmigen Ablagefläche 3 mit einem Mittelabschnitt und zwei an dem Mittelabschnitt angeordneten Seitenteilen, die sich von dem Mittelabschnitt trapezartig nach oben - von der Zeichnungsebene weg - erstrecken.

Die Ecken der Ablagefläche 3 sind in der hier dargestellten Ausführungsform abgerundet ausgebildet, können jedoch auch als gerade Ecken oder gefast ausgebildet sein. Obgleich die Ablagefläche 3 hier trapezförmig ausgebildet ist, kann diese auch kreissegmentartig oder - in der einfachsten Ausgestaltung - flach ausgebildet sein.

An einem oberen Ende der Vorrichtung 1 sind ein Griffstück 5 und ein Einhängeabschnitt 7 ausgebildet.

In der hier dargestellten Ausführungsform sind die Ablagefläche 3, das Griffstück 5 und der Einhängeabschnitt 7 aus einem einzigen Stück Metall, beispielsweise Edelstahl geformt. Es ist aber auch denkbar, dass das Griffstück 5 und/oder der Einhängeabschnitt 7 als separate Bauteile gefertigt werden, beispielsweise aus einem anderen Material, und dann mit der Ablagefläche 3 verbunden werden, beispielsweise durch Kleben, Laserschweißen oder dergleichen.

So kann beispielsweise das Griffstück 5 zur Wärmeisolierung aus einem Keramikmaterial, einer Metall-Keramik-Legierung oder dergleichen bestehen und mit der Ablagefläche 3 verbunden sein.

Wie in Fig. 1 zu erkennen ist, sind der Einhängeabschnitt 7 und das Griffstück 5 als sich jeweils von der Ablagefläche 3 als Bezugsebene weg erstreckende Elemente ausgebildet.

Insbesondere sind das Griffstück 5 und der Einhängeabschnitt 7 in der hier dargestellten Ausführungsform an einem in Längsrichtung der Ablagefläche 3 oberen Rand in der Mitte der Ablagefläche 3 in Breitenrichtung angeordnet und erstrecken sich in zueinander entgegengesetzte Richtungen entlang einer Dickenrichtung der Ablagefläche 3. Als Dickenrichtung ist hierbei die Richtung senkrecht zur Erstreckungsrichtung der Ablagefläche 3 in Längsrichtung bzw. Breitenrichtung zu verstehen.

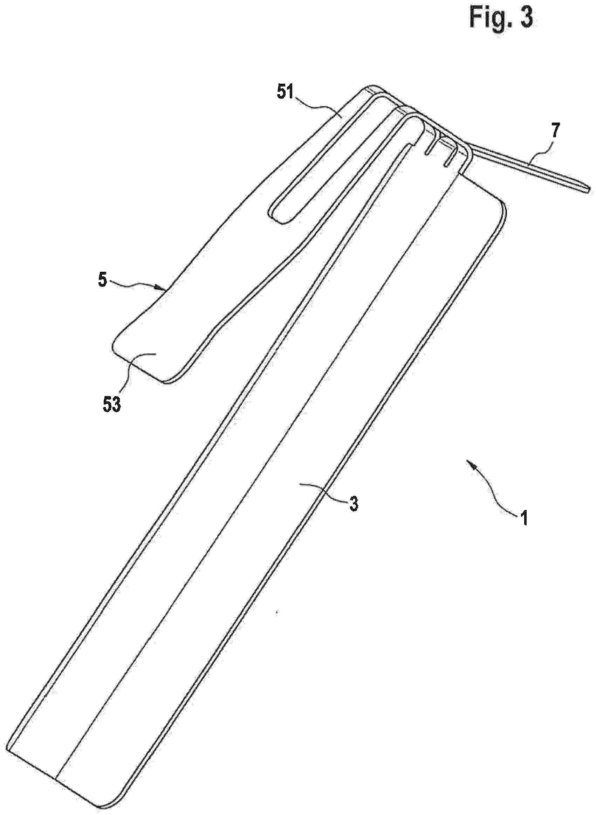

Wie dabei insbesondere aus den Figuren 1 und 3 ersichtlich ist, bilden das Griffstück 5 und die Ablagefläche 3 im Wesentlichen eine U-Form, wobei das Griffstück 5 von einer Rückseite der Ablagefläche 3 als Bezugsebene beabstandet ist und der Rückseite der Ablagefläche 3 zugewandt ist.

Der Winkel, der zwischen dem Griffstück 5 und der Ablagefläche 3 als die beiden Schenkel des U gebildet wird, beträgt bei dieser Ausführungsform zwischen 0° (das Griffstück 5 und die Ablagefläche 3 sind parallel zueinander) und 20° (das Griffstück 5 verläuft schräg von der Ablagefläche 3 weg) oder mehr, kann jedoch je nach Bedarf angepasst werden.

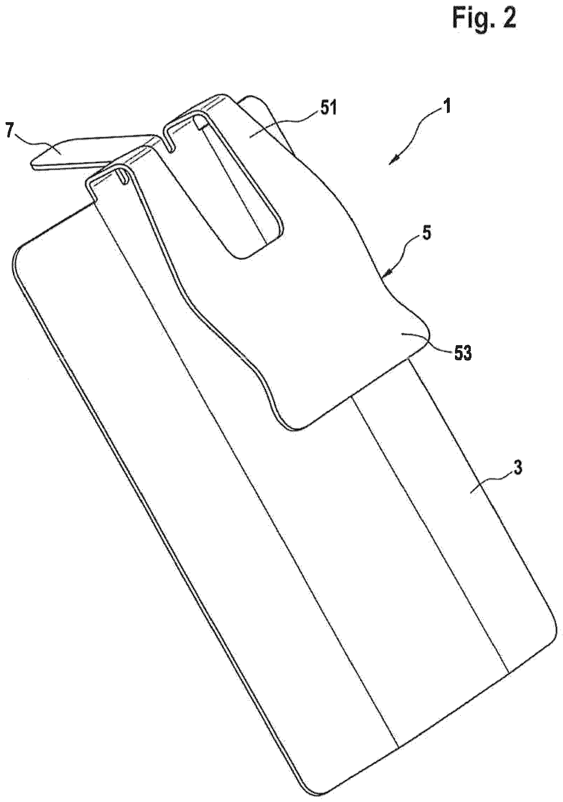

Wie aus Fig. 2 ersichtlich ist, wird das Griffstück 5 in einem oberen Bereich durch zwei sich von der Ablagefläche 3 weg erstreckende, zur Rückseite der Ablagefläche 3 hin gebogene Schenkel 51 gebildet.

Der untere Bereich des Griffstücks besteht zudem aus einer Griffplatte 53, die es dem Nutzer ermöglicht, die Vorrichtung 1 einfach zu greifen und gleichzeitig eine stabile, kippsichere Ablage der Vorrichtung 1, z.B. auf einem Tisch oder der Arbeitsplatte in der Küche, erlaubt.

Wie aus Fig. 3 ersichtlich ist, ist der Abstand zwischen dem Griffstück 5 und der Ablagefläche 3 dabei derart gewählt, dass es nicht nur für den Nutzer leicht möglich ist, die Vorrichtung 1 zum Halten von Kochbeuteln mit der Hand zu greifen, sondern auch, dass die Vorrichtung 1 problemlos an einem Topf oder einer Schüssel eingehängt werden kann, z.B. zur Zubereitung von im Kochbeutel gehaltenen Speisen bzw. Lebensmitteln oder zum Ausleeren des Kochbeutels im Zuge des Servierens der darin zubereiteten Speisen.

Hierfür ist der Bauch des U zwischen Griffstück 5 und Ablagefläche 3 vorzugsweise so bemessen, dass die Vorrichtung 1 nicht lose klappert, wenn sie am Topf hängt, der Nutzer gleichwohl aufgrund der schrägen Anstellung der Schenkel 51 und vor allem der Griffplatte 53 dennoch die Vorrichtung problemlos und sicher greifen kann. Es ist denkbar, dass der Bauch des U zwischen Griffstück 5 und Ablagefläche 3 durch eine hier nicht gezeigte Silikoneinlage rutschfest am Topf befestigt werden kann.

Der ebenfalls am oberen Rand in der Mitte der Ablagefläche 3 ausgebildete Einhängeabschnitt 7 dient dazu, Kochbeutel aufzuhängen.

So haben beispielsweise klassische Kochbeutel zum Zubereiten von Reis an ihrem oberen Rand in der Mitte eine Öffnung, die herkömmlich dazu genutzt wird, den Kochbeutel mit Hilfe einer Gabel oder einem Kochlöffel aus dem kochen Wasser zu fischen und zum Abtropfen auf einen Teller oder dergleichen zu legen.

Derartige Kochbeutel, aber auch andere Kochbeutel, die individuell mit Gemüse, Nudeln oder anderen Lebensmittel gefüllt oder zum Sous-vide garen verwendet werden können, können nun einfach an den Einhängeabschnitt 7 gehängt werden und dann entweder zum Kochen samt Vorrichtung 1 vermittels des Griffstücks 5 an bzw. in den Topf gehängt werden oder zum Abtropfen mit der Vorrichtung 1, beispielsweise auf der Arbeitsplatte oder einem Teller, vor der weiteren Verarbeitung abgelegt werden.

Wie insbesondere in den Figuren 1 und 3 ersichtlich ist, bildet der Einhängeabschnitt 7 mit der Ablagefläche 3 im Wesentlichen eine L-Form.

Der Winkel, der zwischen dem Einhängeabschnitt 7 und der Ablagefläche 3 als die beiden Schenkel des L gebildet wird, liegt bei dieser Ausführungsform zwischen 90° und 130° oder mehr, kann jedoch je nach Bedarf angepasst werden, solange sichergestellt ist, dass der am Einhängeabschnitt 7 eingehängte Kochbeutel nicht abrutschen kann.

Der Winkel, der zwischen dem Einhängeabschnitt 7 und der Ablagefläche 3 als die beiden Schenkel des L gebildet wird, ist somit zumindest 90°, um ein Abrutschen des eingehängten Kochbeutels zu verhindern.

Alternativ kann ein Abrutschen des eingehängten Kochbeutels verhindert werden, indem die Oberfläche des Einhängeabschnitts 7 mit einer geriffelten bzw. gerippten Struktur ausgebildet wird oder das vordere Ende des Einhängeabschnitts 7 hakenartig ausgebildet wird.

Bei der hier dargestellten Ausführungsform ist der Einhängeabschnitt 7, wie auch in den Figuren gezeigt ist, als eine sich zwischen den beiden Schenkeln 51 des Griffstücks 5 L-förmig von der Ablagefläche 3 weg erstreckende Zunge - spatelartig - ausgebildet, an welche die Kochbeutel gehängt werden können.

Obgleich in den Zeichnungen nicht dargestellt, kann an einem in Längsrichtung der Ablagefläche 3 unteren Rand der Ablagefläche 3 eine sich von der Vorderseite der Ablagefläche 3 weg erstreckende Auflage ausgebildet sein.

Diese Auflage kann dabei beispielsweise dreieckig ausgebildet sein, wobei das von der Ablagefläche 3 weg weisende spitze Ende des Dreiecks einen Zacken- oder Wellenschliff hat.

Der Zacken- oder Wellenschliff ermöglich dabei vorteilhaft, dass auf der Ablagefläche 3 befindliche Kochbeutel nach dem Abtropfen direkt - ohne Zuhilfenahme von weiteren Werkzeugen wie einer Schere oder einem Messer - aufgeschnitten werden können, um die im Kochbeutel befindlichen Speisen zu entnehmen.

Gleichzeitig ist der Zacken- oder Wellenschliff so "stumpf" ausgestaltet, dass ein unbeabsichtigtes Aufschneiden des Kochbeutels, beispielsweise beim Ablegen zum Abtropfen auf der Arbeitsplatte, verhindert werden kann.

So kann der Nutzer mit der erfindungsgemäßen Ausgestaltung beispielsweise nach dem Abtropfen der zubereiteten Lebensmittel den Kochbeutel mit einer Küchenzange greifen und den Beutel dann an durch Entlangführen des Kochbeutels entlang der Schneidkante unter Druck aufschneiden, wodurch die fertig gegarten Lebensmittel schnell und einfach aus dem Beutel entnommen werden können, ohne hierfür den Kochbeutel oder das Lebensmittel direkt mit der Hand anfassen zu müssen.

Um zu verhindern, dass sich ein Nutzer bei der Verwendung der Vorrichtung 1 zum Halten von Kochbeuteln die "Finger verbrennt", beispielsweise beim Abnehmen der Vorrichtung 1 vom noch heißen Kochtopf, ist am Griffstück 5 zudem zumindest teilweise eine hier nicht abgebildete Wärmeisolierung ausgebildet.

Diese Wärmeisolierung kann dabei beispielsweise im Übergangsbereich von der Ablagefläche 3 zu den Schenkeln 51 und/oder im Bereich der sich an die Schenkel 51 anschließenden Griffplatte 53 ausgebildet sein. Es ist auch denkbar, dass das Griffstück vollständig eine wärmeisolierende Eigenschaft aufweist, beispielsweise durch die Beschichtung des Griffstücks mit einem wärmeisolierenden Material.

Die hierin beschriebene Vorrichtung 1 zum Halten von Kochbeuteln erlaubt die einfache und saubere Verwendung von Kochbeuteln bei der Zubereitung von allerlei Speisen, entweder in der Form von Kochbeutelreis oder in der Form von individuell in Kochbeutel gepackte Lebensmittel wie Nudeln, Gemüse, Fisch, Fleisch oder dergleichen.

Die hier beschriebene Vorrichtung 1 zum Halten von Kochbeuteln erlaubt insbesondere auch die schonende Sous-vide artige Zubereitung von Speisen derart, dass diese zum Garen im Kochbeutel an den Einhängeabschnitt 7 der Vorrichtung 1 gehängt werden können, um dann mitsamt der Vorrichtung 1 im Topf schonend bei relativ niedrigen Temperaturen von unter 100 °C gegart werden zu können.

Aufgrund der hitzebeständigen Eigenschaft der Vorrichtung 1 als solche kann diese auch für kochendes Wasser verwendet werden, ohne sich zu verziehen. Die Wärmeisolierung erlaubt zudem eine einfache Handhabung ohne Gefahr zu laufen, sich zu verbrennen.

Aufgrund der winkelartigen Ausgestaltung von wärmeisoliertem Griffstück 5 und trapezförmiger Ablagefläche 3 zueinander ist es zudem möglich, die Vorrichtung 1 nach dem Wegnehmen vom heißen Topf einfach auf der Arbeitsplatte, einem Teller oder dergleichen in der Küche zum Abtropfen abzulegen, wobei das restliche Kochwasser entlang der gebogenen Flächen der Ablagefläche 3 abfließen kann.

Nach dem Abtropfvorgang kann der Kochbeutel dann problemlos, ggf. vermittels der zusätzlich vorgesehenen Auflage mit Wellenschliff oder einfach mit einem Messer, geöffnet werden, um die fertig zubereiteten Speisen bzw. Lebensmittel zu entnehmen und zu servieren.

Überdies kann die Vorrichtung auch für die Ablage von Teebeuteln mit losem Tee oder Gewürzsäckchen mit Gewürzmischungen, z.B. für die Zubereitung von Soßen oder Glühwein, nach dem Ziehen verwendet werden.

Da die Vorrichtung 1 zudem einstückig als Stanz-Biegeteil, Druckgussteil oder Spritzgussteil ausgebildet ist, kann die Vorrichtung zudem höchst einfach und hygienisch in der Spülmaschine gereinigt werden.

Die vorliegende Erfindung schafft somit eine einfach handhabbare Vorrichtung zum Halten von Kochbeuteln, die es einerseits erlaubt, den Kochbeutel mitsamt der darin gehaltenen Lebensmittel einfach und schnell abtropfen zu lassen.

Andererseits ermöglicht es Vorrichtung zum Halten von Kochbeuteln, den Kochbeutel nach dem Abtropfen für die Entnahme von zubereiteten Speisen zu öffnen, ohne den Kochbeutel hierfür mit der Hand zu greifen.

Zudem erleichtert die Vorrichtung die Entnahme des Kochbeutels aus dem heißen Wasser, da der Kochbeutel bereits vor der Zubereitung eingehängt werden kann und dann mit der Vorrichtung in das Wasserbad gestellt werden kann.

## Patentansprüche

1. Vorrichtung (1) zum Halten von Kochbeuteln, aufweisend:
eine im Wesentlichen rechteckig ausgebildete Ablagefläche (3),
ein Griffstück (5), und
einen Einhängeabschnitt (7), wobei:
• das Griffstück (5) und der Einhängeabschnitt (7) an einem in Längsrichtung der Ablagefläche (3) oberen Rand, vorzugsweise in der Mitte der Ablagefläche (3) in Breitenrichtung, angeordnet sind und sich in zueinander entgegengesetzte Richtungen entlang einer Dickenrichtung der Ablagefläche (3) erstrecken,
• das Griffstück (5) mit der Ablagefläche (3) im Wesentlichen eine U-Form bildet, wobei das Griffstück (5) von einer Rückseite der Ablagefläche (3) beabstandet und der Rückseite der Ablagefläche (3) zugewandt ist, und sich in einem Winkel, insbesondere zwischen 0° und 20°, entlang der Ablagefläche (3) erstreckend ausgebildet ist,
• der Einhängeabschnitt (7) mit der Ablagefläche (3) im Wesentlichen eine L-Form bildet, wobei der Einhängeabschnitt (7) sich in einem Winkel, insbesondere zwischen 90° und 130°, relativ zu einer Vorderseite der Ablagefläche (3) von der Vorderseite der Ablagefläche (3) weg erstreckend ausgebildet ist, und,
• das Griffstück (5) und der Einhängeabschnitt (7) einstückig mit der Ablagefläche (3) ausgebildet sind.

2. Vorrichtung (1) zum Halten von Kochbeuteln nach Anspruch 1, wobei das Griffstück (5) aus zwei, sich im Wesentlichen U-förmig, von der Ablagefläche (3) weg erstreckenden, zur Rückseite der Ablagefläche (3) hin gebogenen Schenkeln (51) und einer sich an die Schenkel (51) einstückig anschließenden Griffplatte (53) besteht.

3. Vorrichtung (1) zum Halten von Kochbeuteln nach Anspruch 1, wobei der Einhängeabschnitt (7) aus einer sich zwischen den beiden Schenkeln (51) des Griffstücks (5) im Wesentlichen L-förmig von der Ablagefläche (3) weg erstreckenden Zunge besteht.

4. Vorrichtung (1) zum Halten von Kochbeuteln nach einem der Ansprüche 1 bis 3, wobei in zumindest einem Teilbereich der Vorderseite der Ablagefläche (3) an einem in Längsrichtung der Ablagefläche (3) unteren Rand der Ablagefläche (3) eine sich von der Vorderseite der Ablagefläche (3) weg erstreckende Auflage ausgebildet ist.

5. Vorrichtung (1) zum Halten von Kochbeuteln nach Anspruch 4, wobei die Auflage im Wesentlichen dreieckig ausgebildet ist, wobei eine von der Ablagefläche (3) weg weisende Spitze der dreieckigen Auflage eine, insbesondere aus einem Zacken- oder Wellenschliff bestehende, Schneidkante aufweist.

6. Vorrichtung (1) zum Halten von Kochbeuteln nach einem der Ansprüche 1 bis 5, wobei die Ablagefläche (3) trapezartig ausgebildet ist.

7. Vorrichtung (1) zum Halten von Kochbeuteln nach einem der Ansprüche 1 bis 5, wobei die Ablagefläche (3) kreissegmentartig ausgebildet ist.

8. Vorrichtung (1) zum Halten von Kochbeuteln nach einem der vorhergehenden Ansprüche, wobei die Ablagefläche (3) sich zum in Längsrichtung der Ablagefläche (3) oberen Rand hin verjüngend oder kegelstumpfartig ausgebildet ist.

9. Vorrichtung (1) zum Halten von Kochbeuteln nach einem der vorhergehenden Ansprüche, wobei das Griffstück (5) zumindest teilweise, insbesondere im Übergangsbereich von der Ablagefläche (3) zu den Schenkeln (51) und/oder im Bereich der sich an die Schenkel (51) anschließenden Griffplatte (53), eine Wärmeisolierung aufweist.

10. Vorrichtung (1) zum Halten von Kochbeuteln nach einem der vorhergehenden Ansprüche, wobei die Vorrichtung aus einem Stanz-Biegeteil, einem Druckgussteil oder einem Spritzgussteil besteht.

## Claims

1. A device (1) for holding cooking bags, comprising:
a substantially rectangular support surface (3),
a handle piece (5), and
a hanging section (7), wherein:
• the handle piece (5) and the hanging section (7) are arranged on an upper edge in the longitudinal direction of the support surface (3), preferably in the center of the support surface (3) in the width direction, and extend in opposite directions along a thickness direction of the support surface (3),
• the handle piece (5) and the support surface (3) substantially form the shape of a U, with the handle piece (5) being spaced from a rear face of the support surface (3) and facing the rear face of the support surface (3), and extending along the support surface (3) at an angle, particularly between 0° and 20°,
• the hanging section (7) substantially forms the shape of an L with the support surface (3), wherein the hanging section (7) extends away from a front face of the support surface (3) at an angle, particularly between 90° and 130°, with respect to the front face of the support surface (3), and
• the handle piece (5) and the hanging section (7) are integrally formed with the support surface (3).

2. The device (1) for holding cooking bags according to claim 1, wherein the handle piece (5) consists of two legs (51) extending away from the support surface (3), substantially in the shape of a U, which are bent towards the rear face of the support surface (3), and of a handle plate (53) integrally adjoining the legs (51).

3. The device (1) for holding cooking bags according to claim 1, wherein the hanging section (7) consists of a tongue extending between the two legs (51) of the handle piece (5), substantially in an L shape, away from the support surface (3).

4. The device (1) for holding cooking bags according to any one of claims 1 to 3, wherein a support extending away from the front face of the support surface (3) is provided in at least a partial area of the front face of the support surface (3) at a lower edge of the support surface (3) in the longitudinal direction of the support surface (3).

5. The device (1) for holding cooking bags according to claim 4, wherein the support is substantially triangular and a tip of the triangular support, facing away from the support surface (3), has a cutting edge, particularly consisting of a serrated or corrugated edge.

6. The device (1) for holding cooking bags according to any one of claims 1 to 5, wherein the support surface (3) is formed in a trapezoidal design.

7. The device (1) for holding cooking bags according to any one of claims 1 to 5, wherein the support surface (3) is formed in an arc-like design.

8. The device (1) for holding cooking bags according to any one of the preceding claims, wherein the support surface (3) is formed tapered or truncated towards the upper edge in the longitudinal direction of the support surface (3).

9. The device (1) for holding cooking bags according to any one of the preceding claims, wherein the handle piece (5) at least partially comprises heat insulation, particularly in the transition region from the support surface (3) to the legs (51) and/or in the region of the handle plate (53) adjoining the legs (51).

10. The device (1) for holding cooking bags according to any one of the preceding claims, wherein the device consists of a stamped and bent part, a die-cast part or an injection-molded part.

## Revendications

1. Dispositif (1) pour maintenir des sachets de cuisson, comprenant :
une surface de dépôt (3) de forme essentiellement rectangulaire,
une pièce de poignée (5), et
une partie d'accrochage (7), dans lequel :
• la pièce de poignée (5) et la partie d'accrochage (7) sont disposées sur un bord supérieur dans la direction longitudinale de la surface de dépôt (3), de préférence au centre de la surface de dépôt (3) dans la direction de la largeur, et s'étendent dans des directions mutuellement opposées le long d'une direction d'épaisseur de la surface de dépôt (3),
• la pièce de poignée (5) forme essentiellement la forme d'un U avec la surface de dépôt (3), la pièce de poignée (5) étant espacée d'une face arrière de la surface de dépôt (3) et faisant face à la face arrière de la surface de dépôt (3), et étant formée de manière à s'étendre selon un angle, en particulier entre 0° et 20°, le long de la surface de dépôt (3),
• la partie d'accrochage (7) forme essentiellement la forme d'un L avec la surface de dépôt (3), la partie d'accrochage (7) étant formée de manière à s'étendre selon un angle, en particulier compris entre 90° et 130°, par rapport à une face avant de la surface de dépôt (3), en s'éloignant de la face avant de la surface de dépôt (3), et,
• la pièce de poignée (5) et la partie d'accrochage (7) sont formées d'une seule pièce avec la surface de dépôt (3).

2. Le dispositif (1) pour tenir des sachets de cuisson selon la revendication 1, dans lequel la pièce de poignée (5) est constituée de deux branches (51) s'étendant essentiellement en forme d'un U, en s'éloignant de la surface de dépôt (3) et en se courbant vers l'arrière de la surface de dépôt (3), et d'une plaque de poignée (53) se raccordant d'une seule pièce aux branches (51).

3. Le dispositif (1) pour tenir des sachets de cuisson selon la revendication 1, dans lequel la partie d'accrochage (7) est constituée d'une languette s'étendant entre les deux branches (51) de la pièce de poignée (5), essentiellement en forme d'un L, en s'éloignant de la surface de dépôt (3).

4. Le dispositif (1) pour maintenir des sachets de cuisson selon l'une des revendications 1 à 3, dans lequel un support s'étendant à l'écart de la face avant de la surface de dépôt (3) est formé dans au moins une zone partielle de la face avant de la surface de dépôt (3) à un bord inférieur de la surface de dépôt (3) dans la direction longitudinale de la surface de dépôt (3).

5. Le dispositif (1) de maintien des sachets de cuisson selon la revendication 4, dans lequel le support est essentiellement triangulaire et une pointe du support triangulaire, orientée à l'opposé de la surface de dépôt (3), présente un bord coupant, en particulier constitué d'un bord dentelé ou ondulé.

6. Le dispositif (1) de maintien des sachets de cuisson selon l'une des revendications 1 à 5, dans lequel la surface de dépôt (3) est de forme trapézoïdale.

7. Le dispositif (1) de maintien des sachets de cuisson selon l'une des revendications 1 à 5, dans lequel la surface de dépôt (3) est réalisée en forme de segment de cercle.

8. Le dispositif (1) de maintien des sachets de cuisson selon l'une des revendications précédentes, dans lequel la surface de dépôt (3) est réalisée de manière à se rajeunir vers le bord supérieur dans la direction longitudinale de la surface de dépôt (3) ou de manière tronconique.

9. Le dispositif (1) pour le maintien des sachets de cuisson selon l'une des revendications précédentes, dans lequel la pièce de poignée (5) comprend au moins partiellement une isolation thermique, en particulier dans la zone de transition entre la surface de dépôt (3) et les branches (51) et/ou dans la zone de la plaque de poignée (53) qui se raccorde aux branches (51).

10. Le dispositif (1) de maintien des sachets de cuisson selon l'une des revendications précédentes, dans lequel le dispositif est constitué d'une pièce emboutie et pliée, d'une pièce moulée sous pression ou d'une pièce moulée par injection.
